# EUROPÄISCHE PATENTSCHRIFT

(11) **EP 2 619 016 B1**
(45) Veröffentlichungstag und Bekanntmachung des Hinweises auf die Patenterteilung: **15.04.2015**
(21) Anmeldenummer: 10762597.2
(22) Anmeldetag: 23.09.2010
(51) Int. Cl.: B44C 5/04

(54) **VERFAHREN ZUM HERSTELLEN VON PANEELEN UND NACH DEM VERFAHREN HERGESTELLTES PANEEL**
METHOD FOR PRODUCING PANELS AND PANEL PRODUCED ACCORDING TO THE METHOD
PROCÉDÉ DE FABRICATION DE PANNEAUX ET PANNEAU FABRIQUÉ SELON LEDIT PROCÉDÉ

(43) Veröffentlichungstag der Anmeldung: 31.07.2013
(73) Patentinhaber: Flooring Technologies Ltd., Pieta PTA 9044 (MT)
(72) Erfinder: OLDORFF, Frank, 19057 Schwerin (DE); SIEBERT, Axel, 17207 Röbel (DE)
(74) Vertreter: Friedrich, Andreas
(86) Internationale Anmeldenummer: PCT/EP2010/005816
(87) Internationale Veröffentlichungsnummer: WO 2012/037950

(56) Entgegenhaltungen:
- EP-A1- 2 236 313
- EP-A2- 1 454 763
- WO-A1-03/076146
- AT-B- 351 744

## Beschreibung

Die Erfindung betrifft ein Verfahren zum Herstellen von Paneelen, die aus einer großformatigen Trägerplatte mit einem Kern aus Holzwerkstoff aufgeteilt werden.

Aus der EP 1 454 763 A2 ist ein Verfahren zum Veredeln einer Holz- oder Holzwerkstoffplatte, insbesondere MDF- oder HDF-Platte mit einer Oberseite und einer Unterseite bekannt, bei dem zunächst auf die Oberseite der Platte eine Versiegelungsschicht aus Melaminharz aufgetragen wird, auf die Versiegelungsschicht ein Dekor aufgedruckt und auf das Dekor dann eine Schutzschicht aus Melaminharz aufgetragen wird. Anschließend wird der Aufbau der Platte unter Temperatureinwirkung verpresst, bis die Schutzschicht und die Versiegelungsschicht schmelzen und sich unter Einschluss des aufgedruckten Dekors miteinander verbinden.

In der DE 195 32 819 A1 wird ein Verfahren zur Herstellung einer Holzwerkstoffplatte mit einer optisch gestaltbaren Oberfläche offenbart, bei der auf der Holzwerkstoffplatte nacheinander eine Grundierfärbung, eine Versiegelung, eine Druckbasis und ein Dekordruck aufgebracht werden. Die Druckbasis wird dabei aus einer Grundiereinfärbung bzw. einer Grundierung einer Lackversiegelung und einem Oberflächenlack aufgebaut. Mittels Gravurzylindern kann auf die Druckbasis ein Dekordruck beispielsweise in einem Zwei-Farben-Druck aufgedruckt werden. Auf diesen Druck kann abschließend ein mehrschichtiger Acrylat-UV-Lack aufgebracht werden, der mittels UV-Licht härtbar ist.

Die DE 197 51 115 A1 offenbart ein Verfahren zur Beschichtung eines Paneels, bei dem auf die Oberfläche zumindest eine Farbschicht mittels eines Druckverfahrens, insbesondere mittels Siebdruck, aufgebracht wird. Dabei kann die Oberfläche unbehandelt, geschliffen oder vorbehandelt, insbesondere lackiert sein. Abschließend kann die aufgebrachte Farbschicht durch eine Beschichtung mit Klarlack abgedeckt werden.

Bei der Anwendung der Direktdrucktechnologie, also das unmittelbare Aufdrucken der einzelnen Schichten auf die Trägerplatte, zeigt sich im Ergebnis gegenüber herkömmlich gefertigten Paneelen eine Dickenminderung der fertigen Laminatpaneele durch das Weglassen der Papierlagen. Dies führt zu Problemen bei der Fließfertigung, wenn die großformatigen beschichteten Platten anschließend zur Herstellung der Paneele aufgeteilt werden. Damit sichergestellt ist, dass einzelne Paneele nicht durch Untermaß der Dicke aus der DIN 13329 herausfallen, muss eine hohe Qualitätssicherung betrieben werden, was einerseits die Fertigung verlangsamt und andererseits auch die Herstellkosten erhöht. Letztendlich kommt es auch zu einer Irritation beim Händler und/oder Endverbraucher, da die Stapelhöhe direkt beschichteter Platten von herkömmlich beschichteten Platten sichtbar abweicht.

Bei der bekannten Plattenfertigung werden üblicherweise HDF-Platten als Trägerplatten eingesetzt, deren Oberseite um etwa 0,3 mm abgeschliffen wird. An der Oberseite und der Unterseite der Trägerplatte ist eine Presshaut ausgebildet, die auch Press-Patina oder Verrottungsschicht genannt wird. Die Presshaut entsteht beim Verpressen des Faser- oder Spänekuchens und wird durch die heiße Oberfläche der Pressplatten bzw. Bänder der Presse erzeugt. Die Presshaut hat eine Dicke von etwa 0,3 mm. Da die Presshaut vollständig und etwa 0,1 mm vom Kernmaterial zur Verringerung der Rautiefe auf der Oberseite der Trägerplatte vor der weiteren Beschichtung abgeschliffen wird, müssen die Platten um eine entsprechende Schleifzugabe dicker gefertigt werden, was die Herstellungskosten nachhaltig beeinflusst. Um ein normgerechtes, mittels Direktdrucktechnologie hergestelltes Fußbodenlaminat mit einer Dicke von 6 mm herzustellen, muss die Trägerplatte mindestens eine Dicke von 6,1 mm aufweisen.

Die Presshaut muss deshalb abgeschliffen werden, weil in ihrem Bereich der Wärmeeintrag beim Heißpressen so hoch ist, dass der Klebstoff zu schnell aushärtet, wodurch Leimbrücken wenigstens teilweise brechen und die die aufgetragene Schicht anfällig machen. Dieses Brechen der Leimbrücken macht fertigte Paneele anfällig gegen Abhebungen der auf die Trägerplatte aufgebrachten dekor- und abriebfesten Schichten. Diese Abhebungen werden Delaminierung genannt, die bereits bei normaler Belastung und aus der für Holzwerkstoffe typischen Größenänderung aufgrund von Klimaschwankungen auftreten kann.

Es besteht deshalb ein großer Bedarf an abriebfesten Laminatpaneelen, die sich innerhalb der in der vorstehend genannten Norm befindlichen Dickentoleranz befinden. Ferner besteht Bedarf an einem ressourcenschonenden Verfahren zur Herstellung, beim dem Extrakosten aus zusätzlichen Verfahrensschritten und/oder durch zusätzliche Materialien weitgehend vermieden werden.

In der nicht vorveröffentlichten EP 2 236 313 wird vorgeschlagen, nur einen Teil der Presshaut, nämlich 0,1 mm Dicke, abzuschleifen. Durch dieses Verfahren kann eine Materialeinsparung von nahezu 5 % erreicht werden, wodurch Holz, Leim und Teile der zur Verarbeitung notwendigen Energie eingespart werden. Ein normgerechtes 6 mm-Laminatpaneel kann mit dem in dieser Druckschrift beschriebenen Verfahren aus einer Trägerplatte hergestellt werden, die 5,8 mm dick ist. Bei einem herkömmlichen Herstellungsverfahren muss die Trägerplatte eine Dicke von 6,1 mm aufweisen.

Von dieser Problemstellung ausgehend soll das eingangs beschriebene Verfahren zur Herstellung von Paneelen, insbesondere Fußbodenpaneelen, weiter verbessert werden.

Zur Problemlösung zeichnet sich das Verfahren durch folgende Schritte aus:
a) Streuen von beleimten Holzfasern oder Holzspänen zu einem Holzwerkstoffkuchen,
b) Verpressen des Holzwerkstoffkuchens unter erhöhtem Temperatureinfluss zu einer großformatigen Trägerplatte, die pressblank bereitgestellt wird und zumindest auf ihrer Oberseite eine bei ihrer Herstellung entstandene Presshaut aufweist,
c) Auftragen einer Grundierung aus einem flüssigen Harz auf Melaminbasis auf die Oberseite der Trägerplatte, wobei das Harz wenigstens teilweise in die obere Randschicht der Trägerplatte hinein penetriert und den Bereich der Presshaut zumindest teilweise durchdringt und vergütet,
d) Trocknen der Grundierung,
e) Auftragen eines Primers auf die Grundierung,
f) Trocknen des Primers,
g) Auftragen wenigstens eines mit Farbpigmenten angereicherten, wasserbasierten Lackes zur Erzeugung eines Dekors,
h) Trocknen des Dekors,
i) Aufbringen einer Versiegelung aus wenigstens einem mit abriebfesten Partikeln und Zellulosefasern angereicherten Harz auf Melaminbasis,
j) Trocknen der Versiegelung,
k) Auftragen einer Grundierung aus einem flüssigen Harz auf Melaminbasis auf die Unterseite der Trägerplatte, wobei das Harz wenigstens teilweise in die untere Randschicht der Trägerplatte hinein penetriert,
l) Trocknen der Grundierung,
m) Aufbringen eines Gegenzuges auf die Unterseite der Trägerplatte,
n) Verpressen des Schichtaufbaues unter Wirkung und von Druck und Temperatur,
o) Aufteilen der Trägerplatte in Paneele gewünschter Breite und Länge,
p) Anbringen von Verbindungsmitteln und Verriegelungselementen an sich gegenüberliegenden Seitenkanten zum leimlosen Verbinden und Verriegeln mehrerer Paneele zu einem schwimmend verlegten Fußbodenverbund.

Es hat sich gezeigt, dass durch eine Grundierung aus einem flüssigen Harz auf Melaminbasis, auf die anschießend ein Primer aufgetragen wird, gebrochene Leimbrücken repariert werden bzw. so ausgeglichen werden, dass die nachfolgend aufgetragenen Schichten nicht mehr anfällig gegen Abhebungen sind.

Dadurch, dass die Trägerplatte dünner gefertigt werden kann, steigt die Geschwindigkeit der Heißpresse und damit auch deren Ausbringung (Menge/Zeiteinheit). Da die Presshaut nicht mehr abgeschliffen werden muss, entfällt nicht nur Handlingzeit, was die Produktionszeit reduziert, sondern auch die laufenden Kosten für die Schleifbänder entfallen. Da die Schicht höchster Rohdicke erhalten bleibt, kann das Heißpressen mit weniger Druck und/oder mit höherer Geschwindigkeit erfolgen. Das Einstellfenster zum Heißpressen zur Optimierung der Ausbringung wird folglich größer.

Durch das Einpenetrieren von Harz in die obere Schicht der Trägerplatte werden einerseits die Eigenschaften der Presshaut kompensiert und gleichzeitig ein guter Unterbau für Dekor und abriebfeste Lage geschaffen. In der Praxis hat sich gezeigt, dass die Gefahr einer Delaminierung bei Bodenpaneelen, die erfindungsgemäß hergestellt wurden, gering ist. Eine deutliche Qualitätsverbesserung wurde erreicht.

Vorzugsweise wird als Trägerplatte eine MDF-, HDF- oder Spanplatte verwendet.

Die Dicke der Trägerplatte weist vorzugsweise eine Dicke zwischen 4 und 12 mm, insbesondere vorzugsweise von 5,8 mm, auf und die Presshaut weist insbesondere vorzugsweise eine Dicke von etwa 0,2 mm auf.

Die Benetzbarkeit der Oberfläche der pressblanken Trägerplatte kann bevorzugt auch noch dadurch eingestellt werden, dass vor dem Verpressen auf die Oberseite des Holzwerkstoffkuchens ein Additiv aufgegeben wird. Dieses Additiv wird vorzugsweise unmittelbar vor dem Einlaufen des Holzwerkstoffkuchens in die Heißpresse (beispielsweise eine Contipresse) aufgegeben.

Das Additiv ist vorzugsweise ein Tensid oder besteht aus Tensiden und weiteren Bestandteilen. Insbesondere vorzugsweise liegt es in flüssiger Form vor.

Die weiteren Bestandteile des Additivs neben Tensiden können Biozide, Stabilisatoren und/oder Polymere sein. Der Anteil an Tensiden ist bevorzugt größer als 90%.

Praktische Versuche haben ergeben, dass eine gute Wirkung erzielt wird, wenn das Additiv in einer Menge von 1 bis 30 mg/m² gleichmäßig verteilt auf die Oberfläche des Holzwerkstoffkuchens aufgebracht wird.

Als abriebfeste Partikel werden vorzugsweise Korundpartikel in der Versiegelungsschicht verwendet.

Nach der Aufteilung kann eine Mehrzahl von Paneelen zu einem Gebinde verpackt werden.

Ein Paneel mit einem Kern aus Holzfasern oder -späne zeichnet sich durch folgende Merkmale aus:
a) einer Oberseite, einer Unterseite und zwei Paar gegenüberliegenden Seitenkanten,
b) die Oberseite und die Unterseite des Kerns weisen eine beim Verpressen entstandene Presshaut auf,
c) zumindest auf die Presshaut auf der Oberseite sind eine Grundierschicht, eine Primerschicht, wenigstens eine Dekorschicht und eine abriebfeste Schicht aufgebracht,
d) auf der Unterseite des Kerns sind eine Grundierschicht und eine Gegenzugschicht aufgebracht,
e) die Grundierschicht ist zumindest teilweise in die Presshaut an der Oberseite eingedrungen.

Die Grundierschicht besteht vorzugsweise aus einem Melaminharz. Auf der Grundierschicht kann bevorzugt zumindest auf der Oberseite auf der Presshaut ein Additiv aufgebracht sein.

Die abriebfeste Schicht weist neben Zellulosefasern als abriebfeste Partikel vorzugsweise Korundpartikel auf.

Die erfindungsgemäße Technologie gilt für Paneeldicken von 4 bis 12 mm.

Nachfolgend soll das erfindungsgemäße Verfahren beispielhaft für ein die DIN 13329 erfüllendes 6 mm-Fußbodenlaminat erläutert werden.

Zunächst werden Holzhackschnitzel zu Fasern aufgeschlossen oder zu Spänen zerkleinert. Anschließend werden die Fasern oder Späne mit einem Leim, beispielsweise Melaminharz, beleimt. Über eine Streueinrichtung werden die beleimten und getrockneten Holzfasern oder Holzspäne auf ein kontinuierlich umlaufendes Förderband zu einem Holzwerkstoffkuchen gestreut. Die Fasern oder Späne können in mehren Lagen gestreut werden. Die Ausrichtung der Späne kann in aneinander angrenzenden Lagen um 90° versetzt sein. Der gestreute Holzwerkstoffkuchen wird über das Förderband einer Contipresse zugeführt, in der unter hohem Druck und hoher Temperatur die beleimten Holzfasern oder Holzspäne zu einer großformatigen Trägerplatte gewünschter Dicke, vorzugsweise mit einer Dicke von etwa 5,8 mm, gepresst werden. Unmittelbar vor dem Einlauf des Holzwerkstoffkuchens in die Presse kann die Oberseite des Holzwerkstoffkuchens mit einem Additiv gleichmäßig benetzt werden. Das Additiv wird in einer Menge von etwa 1 bis 30 mg/m² aufgetragen. Es besteht aus einem Tensid oder aus Tensiden mit weiteren Bestandteilen, wie beispielsweise Bioziden, Stabilisatoren und/oder Polymeren. Das Additiv kann aufgestreut werden, wenn es pulverförmig vorliegt, oder aufgedüst werden, wenn es flüssig ist. Nach dem Verpressen des Holzwerkstoffkuchens ist die Trägerplatte an ihrer Oberseite und ihrer Unterseite mit einer Presshaut versehen, die infolge der heißen Pressbleche beim Verpressen des Faser- oder Spänekuchens entstanden ist. Dann wird die Presshaut zum Einstellen der Benetzbarkeit der Oberfläche mit einem flüssigen Harz auf Melaminbasis grundiert. Das Harz penetriert mit seinen aushärtbaren Bestandteilen zumindest teilweise in die obere Randschicht und durchdringt die Presshaut um bis zu 0,2 mm. Dadurch wird die Presshaut vergütet.

Anschließend erfolgt ein Trocknungsvorgang. Auf die getrocknete Grundierung wird eine Primerschicht aufgetragen und anschließend getrocknet. Auf die trockene Primerschicht wird wenigstens ein mit Farbpigmenten angereicherter, wasserbasierter Lack zur Erzeugung eines Dekors aufgetragen. Das Dekor kann Uni-Farben, eine Holzmaserung, einen Fliesenspiegel oder ein Phantasiedekor sein. Auch Natursteindekore sind vorstellbar. Nachdem die aufgebrachte Dekorschicht getrocknet wurde, wird eine Versiegelung mit wenigstens einem mit abriebfesten Partikeln und Zellulosefasern angereicherten Harz aufgebracht. Das Harz ist auf Melaminbasis aufgebaut. Anschließend wird die aufgebrachte Versiegelung getrocknet und dann die Unterseite der Trägerplatte mit einem flüssigen Harz auf Melaminbasis grundiert, wobei das Harz wenigstens teilweise in die untere Randschicht und ggf. die untere Presshaut hinein diffundiert. Die Grundierung wird sodann vollständig getrocknet und eine flüssige Kunstharzschicht als Gegenzug auf die Unterseite der Trägerplatte aufgestrichen. Anschließend wird dieser Schichtaufbau unter Wirkung von Druck und Temperatur verpresst.

Die so veredelte großformatige Trägerplatte wird dann in Paneele gewünschter Größe aufgeteilt. Anschließend werden die gegenüberliegenden Seitenkanten der aufgeteilten Paneele mit zueinander korrespondierenden Verbindungsmitteln und Verriegelungselementen profiliert, damit mehrere identisch ausgebildete Paneele miteinander verbunden und zueinander verriegelt werden können, um einen schwimmend verlegten Fußbodenverbund herzustellen.

Eine Mehrzahl aufgeteilter Paneele wird in bekannter Weise zu einem Gebinde verpackt und ggf. eingelagert.

Es ist generell bekannt, dass es beim Direktbeschichten, also dem flüssigen Auftragen von Dekor- und/oder abriebfesten Schichten auf die Oberfläche einer Trägerplatte aus MDF/HDF, wegen der über die Plattenoberfläche unterschiedlichen Saugfähigkeit zu unerwünschten Dekorabweichungen kommt, die in aller Regel erst nach dem Laminieren sichtbar werden. Dafür sind die Inhomogenitäten der Holzwerkstoffplatte selbst, die sich größtenteils aus schwankenden Holzrezepten ergeben, aus denen die Fasern als Hauptbestandteil einer MDF/HDF-Platte hergestellt werden. Diese Schwankungen ergeben sich beispielsweise aus saisonaler und territorialer Verfügbarkeit und aus der Holzart selbst, insbesondere aus der Dichte und dem pH-Wert des speziellen Holzes und aus dem Zustand des Holzes. Idealerweise hätte ein Holzrezept keine Dichte- und/oder pH-Wertschwankungen. Buche z. B. erfordert beim Zerfasern etwa 60 kWh/t, wohingegen Kiefer etwa 120 kWh/t bedarf. Bei der Verarbeitung ergeben sich daher schlimmstenfalls aus der Kieferfaser, wohingegen aus der Buche nahezu staubgroße Partikel entstehen. Beim Heißpressen entstehen die zuvor als nachteilig dargestellten inhomogänen MDF/HDF-Platten. Das Additiv, das vor dem Einlaufen des Holzwerkstoffkuchens in die Pressplatte aufgegeben werden kann, beeinflusst, wie bereits dargelegt, die Benetzbarkeit der Plattenoberfläche. Dadurch ergibt sich auch eine gleichmäßige Saugfähigkeit der Plattenoberfläche, so dass es nicht mehr zu den bisher bekannten unerwünschten Dekorabweichungen kommen kann.

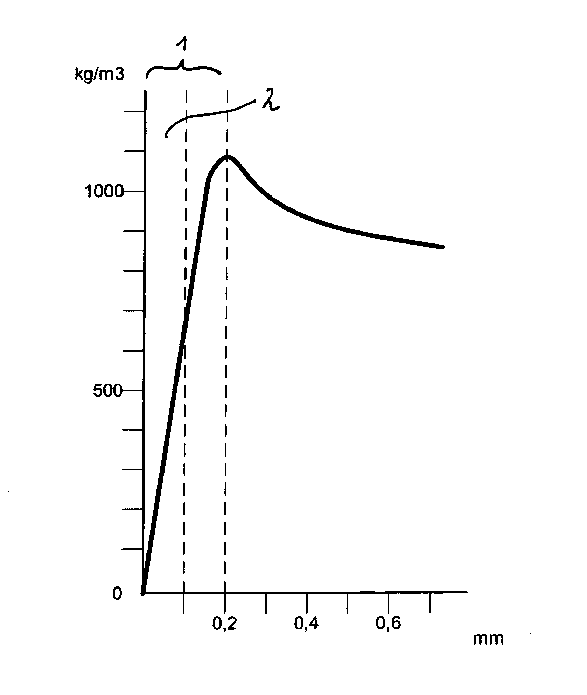

Die Zeichnung zeigt den Auszug eines Rohdichteprofils einer HDF-Platte zur Verwendung für einen Fußbodenbelag. Der mit 1 bezeichnete Bereich ist die so genannte Verrottungsschicht (Presshaut), die bei herkömmlichen Platten abgeschliffen wurde. Der mit 2 bezeichnete Bereich stellt den Bereich dar, der das optionale Additiv beinhaltet. In dem Diagramm ist die Rohdichte in Kilogramm pro m³ und die Plattendicke in mm angegeben. Es ist deutlich erkennbar, dass die Rohdichte innerhalb der Presshaut schnell in einen Bereich von über 1000 kg pro m³ ansteigt und dann im Kern zur Kernmitte hin wieder abfällt.

## Patentansprüche

1. Verfahren zum Herstellen von Paneelen mit folgenden Schritten:
a) Streuen von beleimten Holzfasern oder Holzspänen zu einem Holzwerkstoffkuchen,
b) Verpressen des Holzwerkstoffkuchens unter erhöhtem Temperatureinfluss zu einer großformatigen Trägerplatte, die pressblank bereitgestellt wird und zumindest auf ihrer Oberseite eine bei ihrer Herstellung entstandene Presshaut aufweist,
c) Auftragen einer Grundierung aus einem flüssigen Harz auf Melaminbasis auf die Oberseite der Trägerplatte, wobei das Harz wenigstens teilweise in die obere Randschicht der Trägerplatte hinein penetriert und den Bereich der Presshaut zumindest teilweise durchdringt und vergütet,
d) Trocknen der Grundierung,
e) Auftragen eines Primers auf die Grundierung,
f) Trocknen des Primers,
g) Auftragen wenigstens eines mit Farbpigmenten angereicherten, wasserbasierten Lackes zur Erzeugung eines Dekors,
h) Trocknen des Dekors,
i) Aufbringen einer Versiegelung aus wenigstens einem mit abriebfesten Partikeln und Zellulosefasern angereicherten Harz auf Melaminbasis,
j) Trocknen der Versiegelung,
k) Auftragen einer Grundierung aus einem flüssigen Harz auf Melaminbasis auf die Unterseite der Trägerplatte, wobei das Harz wenigstens teilweise in die untere Randschicht der Trägerplatte hinein penetriert,
l) Trocknen der Grundierung,
m) Aufbringen eines Gegenzuges auf die Unterseite der Trägerplatte
n) Verpressen des Schichtaufbaues unter Wirkung und von Druck und Temperatur,
o) Aufteilen der Trägerplatte in Paneele gewünschter Breite und Länge,
p) Anbringen von Verbindungsmitteln und Verriegelungselementen an sich gegenüberliegenden Seitenkanten zum leimlosen Verbinden und Verriegeln mehrerer Paneele zu einem schwimmend verlegten Fußbodenverbund.

2. Verfahren nach Anspruch 1, **dadurch gekennzeichnet, dass** als Trägerplatte eine MDF-, HDF- oder Spanplatte hergestellt wird.

3. Verfahren nach einem der Ansprüche 1 oder 2, **dadurch gekennzeichnet, dass** die Presshaut eine Dicke von etwa 0,2 mm aufweist.

4. Verfahren nach Anspruch 1, **dadurch gekennzeichnet, dass** zum Einstellen der Benetzbarkeit der Oberfläche der pressblanken Trägerplatte vor dem Verpressen auf den Holzwerkstoffkuchen ein Additiv aufgegeben wird.

5. Verfahren nach Anspruch 4, **dadurch gekennzeichnet, dass** das Additiv flüssig ist.

6. Verfahren nach Anspruch 4 oder 5, **dadurch gekennzeichnet, dass** das Additiv ein Tensid ist oder aus Tensiden und weiteren Bestandteilen besteht.

7. Verfahren nach Anspruch 6, **dadurch gekennzeichnet, dass** die weiteren Bestandteile Biozide, Stabilisatoren und/oder Polymere sind.

8. Verfahren nach Anspruch 6 oder 7, **dadurch gekennzeichnet, dass** der Anteil an Tensiden größer als 90% ist.

9. Verfahren nach einem der Ansprüche 4 bis 8, **dadurch gekennzeichnet, dass** das Additiv unmittelbar vor dem Einlauf des Holzwerkstoffkuchens in die Presse aufgegeben wird.

10. Verfahren nach einem der Ansprüche 4 bis 9, **dadurch gekennzeichnet, dass** das Additiv in einer Menge von 1 bis 30 Milligramm pro Quadratmeter gleichmäßig verteilt aufgebracht wird.

11. Verfahren nach einem der vorstehenden Ansprüche, **dadurch gekennzeichnet, dass** die Grundierung die Presshaut bis auf eine Tiefe von bis zu 0,2 mm durchdringt.

12. Verfahren nach einem oder mehreren der vorstehenden Ansprüche, **dadurch gekennzeichnet, dass** als abriebfeste Partikel Korundpartikel verwendet werden.

13. Paneel mit einem verpressten Kern aus Holzwerkstoff, insbesondere aus Fasern oder Spänen mit:
a) einer Oberseite, einer Unterseite und zwei Paar gegenüberliegenden Seitenkanten,
b) zumindest auf die Presshaut auf der Oberseite sind eine Grundierschicht, eine Primerschicht, wenigstens eine Dekorschicht und eine abriebfeste Schicht aufgebracht,
c) auf der Unterseite des Kerns sind eine Grundierschicht und eine Gegenzugschicht aufgebracht,
**gekennzeichnet durch** folgende Merkmale:
d) die Oberseite und die Unterseite des Kerns weisen eine beim Verpressen entstandene Presshaut auf,
e) die Grundierschicht ist zumindest teilweise in die Presshaut an der Oberseite eingedrungen,
f) die Primerschicht ist zwischen der Grundierschicht und der Dekorschicht angeordnet,
g) die abriebfeste Schicht enthält Korundpartikel und Zellulosefasern,
h) die Dekorschicht besteht aus einem wasserbasierten Lack,
i) an den Seitenkanten sind Verbindungsmittel und Verriegelungsmittel zum leimlosen Verbinden und Verriegeln mehrerer Paneele angebracht.

14. Paneel nach Anspruch 13, **dadurch gekennzeichnet, dass** zumindest auf der Oberseite unter der Grundierschicht auf der Presshaut ein Additiv aufgebracht ist.

15. Paneel nach Anspruch 14, **dadurch gekennzeichnet, dass** das Additiv ein Tensid ist oder aus Tensiden und weiteren Bestandteilen besteht und flüssig ist.

16. Paneel nach einem der Ansprüche 13 bis 15, **gekennzeichnet durch** eine Dicke von 4 bis 12 mm.

## Claims

1. Method for producing panels, having the following steps:
a) scattering glued wood fibers or wood chips to form a wood material cake,
b) pressing the wood material cake at elevated temperature to form a large-format substrate board, which is provided press-finished and has a press skin that arose during the production of the substrate board, at least on the upper face thereof,
c) applying a base coat made of a liquid melamine-based resin to the upper face of the substrate board, the resin at least partially penetrating into the top surface layer of the substrate board and at least partially penetrating and improving the region of the press skin,
d) drying the base coat,
e) applying a primer to the base coat,
f) drying the primer,
g) applying at least one water-based paint enriched with pigments in order to produce a decoration,
h) drying the decoration,
i) applying a seal made of at least one melamine-based resin enriched with wear-resistant particles and cellulose fibers,
j) drying the seal,
k) applying a base coat made of a liquid melamine-based resin to the lower face of the substrate board, the resin at least partially penetrating into the lower surface layer of the substrate board,
l) drying the base coat,
m) applying a counteracting layer to the lower face of the substrate board,
n) pressing the layer structure under the action of pressure and temperature,
o) dividing the substrate board into panels of the desired width and length,
p) attaching connecting means and locking elements to opposite side edges in order to connect and lock a plurality of panels without glue to form a floatingly laid floor composite.

2. Method according to Claim 1, **characterized in that** the substrate board produced is an MDF, HDF or chipboard.

3. Method according to either of Claims 1 and 2, **characterized in that** the press skin has a thickness of about 0.2 mm.

4. Method according to Claim 1, **characterized in that,** in order to adjust the wettability of the upper face of the press-finished substrate board, an additive is put onto the wood material cake before the pressing.

5. Method according to Claim 4, **characterized in that** the additive is liquid.

6. Method according to Claim 4 or 5, **characterized in that** the additive is a surfactant or consists of surfactants and further constituents.

7. Method according to Claim 6, **characterized in that** the further constituents are biocides, stabilizers and/or polymers.

8. Method according to Claim 6 or 7, **characterized in that** the proportion of surfactants is greater than 90%.

9. Method according to one of Claims 4 to 8, **characterized in that** the additive is put on immediately before the wood material cake runs into the press.

10. Method according to one of Claims 4 to 9, **characterized in that** the additive is applied in a quantity of 1 to 30 milligrams per square meter, distributed uniformly.

11. Method according to one of the preceding claims, **characterized in that** the base coat penetrates the press skin down to a depth of up to 0.2 mm.

12. Method according to one or more of the preceding claims, **characterized in that** corundum particles are used as wear-resistant particles.

13. Panel having a pressed core made of wood material, in particular of fibers or chips, having:
a) an upper face, a lower face and two pairs of opposite side edges,
b) a base coat layer, a primer layer, at least one decorative layer and a wear-resistant layer are applied at least to the press skin on the upper face,
c) a base coat layer and a counteracting layer are applied to the lower face of the core,
**characterized by** the following features:
d) the upper face and the lower face of the core have a press skin that arose during pressing,
e) the base coat layer has at least partly penetrated into the press skin on the upper face,
f) the primer layer is arranged between the base coat layer and the decorative layer,
g) the wear-resistant layer contains corundum particles and cellulose fibers,
h) the decorative layer consists of a water-based paint,
i) connecting means and locking means are attached to the side edges in order to connect and lock a plurality of panels without glue.

14. Panel according to Claim 13, **characterized in that** an additive is applied to the press skin under the base coat layer, at least on the upper face.

15. Panel according to Claim 14, **characterized in that** the additive is a surfactant or consists of surfactants and further constituents and is liquid.

16. Panel according to one of Claims 13 to 15, **characterized by** a thickness of 4 to 12 mm.

## Revendications

1. Procédé de fabrication de panneaux comprenant les étapes suivantes :
a) saupoudrer des copeaux ou des fibres de bois encollés pour former un gâteau de matériau à base de bois,
b) comprimer le gâteau de matériau à base de bois sous l'influence d'une température élevée pour former une plaque porteuse grand format, qui est fournie brute de pressage et présente au moins sur sa face supérieure une peau de compression formée au cours de sa fabrication,
c) appliquer un apprêt en résine liquide à base de mélamine sur la face supérieure de la plaque porteuse, la résine pénétrant au moins partiellement dans la couche de surface supérieure de la plaque porteuse et au moins partiellement pénétrant et améliorant la région de la peau de compression,
d) sécher l'apprêt,
e) appliquer une couche primaire sur l'apprêt,
f) sécher la couche primaire,
g) appliquer au moins un vernis à base d'eau, enrichi avec des pigments de couleurs pour produire un décor,
h) sécher le décor,
i) appliquer une vitrification à partir d'au moins une résine à base de mélamine enrichie de fibres de cellulose et de particules résistantes à l'abrasion,
j) sécher la vitrification,
k) appliquer un apprêt en résine liquide à base de mélamine sur la face inférieure de la plaque porteuse, la résine pénétrant au moins partiellement dans la couche de surface inférieure de la plaque porteuse,
l) sécher l'apprêt,
m) appliquer une contretraction sur la face inférieure de la plaque porteuse,
n) comprimer la construction en couches sous l'action de la pression et de la température,
o) diviser la plaque porteuse en panneaux de largeur et longueur souhaitées,
p) attacher des moyens de liaison et des éléments de verrouillage aux bords latéraux opposés pour relier sans colle et verrouiller plusieurs panneaux pour former un ensemble plancher posé flottant.

2. Procédé selon la revendication 1, **caractérisé en ce qu'**une plaque de MDF, HDF ou de copeaux est fabriquée comme plaque porteuse.

3. Procédé selon l'une des revendications 1 ou 2, **caractérisé en ce que** la peau de compression présente une épaisseur d'environ 0,2 mm.

4. Procédé selon la revendication 1, **caractérisé en ce qu'**un additif est inséré sur le gâteau de matériau à base de bois avant la compression pour ajuster la mouillabilité de la surface supérieure de la plaque porteuse brute de pressage.

5. Procédé selon la revendication 4, **caractérisé en ce que** l'additif est liquide.

6. Procédé selon la revendication 4 ou 5, **caractérisé en ce que** l'additif est un agent tensio-actif ou constitué d'agents tensio-actifs et d'autres composants.

7. Procédé selon la revendication 6, **caractérisé en ce que** les autres composants sont des biocides, des stabilisants et/ou des polymères.

8. Procédé selon la revendication 6 ou 7, **caractérisé en ce que** la proportion d'agents tensio-actifs est supérieure à 90%.

9. Procédé selon l'une quelconque des revendications 4 à 8, **caractérisé en ce que** l'additif est inséré directement avant l'entrée du gâteau de matériau à base de bois dans la presse.

10. Procédé selon l'une des revendications 4 à 9, **caractérisé en ce que** l'additif est appliqué uniformément en une quantité de 1 à 30 milligrammes par mètre carré.

11. Procédé selon l'une quelconque des revendications précédentes, **caractérisé en ce que** l'apprêt pénètre dans la peau de compression à une profondeur allant jusqu'à 0,2 mm.

12. Procédé selon l'une ou plusieurs des revendications précédentes, **caractérisé en ce que** des particules de corindon sont utilisées comme particules résistantes à l'abrasion.

13. Panneau comprenant une âme comprimée en matériau à base de bois, en particulier en fibres ou copeaux, comprenant :
a) une face supérieure, une face inférieure et deux paires de bords latéraux opposés,
b) une couche d'apprêt, une couche primaire, au moins une couche de décor et une couche résistante à l'abrasion sont appliquées au moins sur la peau de compression sur la face supérieure de l'âme,
c) une couche d'apprêt et une couche de contretraction sont appliquées sur la face inférieure de l'âme,
**caractérisé par** les particularités suivantes :
d) la face supérieure et la face inférieure de l'âme présentent une peau de compression résultant de la compression,
e) la couche d'apprêt a pénétré au moins partiellement dans la peau de compression sur la face supérieure,
f) la couche primaire est disposée entre la couche d'apprêt et la couche de décor,
g) la couche résistante à l'abrasion contient des particules de corindon et des fibres de cellulose,
h) la couche de décor est constituée d'un vernis à base d'eau,
i) des moyens de liaison et des éléments de verrouillage sont rapportés sur des bords latéraux pour relier sans colle et verrouiller plusieurs panneaux.

14. Panneau selon la revendication 13, **caractérisé en ce qu'**un additif est appliqué sur la peau de compression au moins sur la face supérieure sous la couche d'apprêt.

15. Panneau selon la revendication 14, **caractérisé en ce que** l'additif est un agent tensio-actif ou constitué d'agents tensio-actifs et d'autres composants, et est liquide.

16. Panneau selon l'une des revendications 13 à 15, **caractérisé par** une épaisseur de 4 à 12 mm.
